# EUROPEAN PATENT APPLICATION

(11) **EP 1 667 394 A1**
(43) Date of publication of application: **07.06.2006**
(21) Application number: 04788152.9
(22) Date of filing: 27.09.2004
(51) Int. Cl.: H04L 27/36, H04B 1/04

(54) **AMPLITUDE INFORMATION EXTRACTION APPARATUS AND AMPLITUDE INFORMATION EXTRACTION METHOD**

(30) Priority: 30.09.2003 JP 2003341720
(71) Applicant: MATSUSHITA ELECTRIC INDUSTRIAL CO., LTD., Kadoma-shi, Osaka 571-8501 (JP)
(72) Inventor: YOSHIKAWA, Hiroyuki, Tokyo 194-0211 (JP); HIRANO, Shunsuke, Kanagawa 245-0061 (JP)
(74) Representative: Grünecker, Kinkeldey, Stockmair & Schwanhäusser Anwaltssozietät
(86) International application number: PCT/JP2004/014056
(87) International publication number: WO 2005/034461

(57) **Abstract**

An amplitude information extraction apparatus capable of reducing an amplitude error with a smaller circuit scale than theoretical operation circuits. In this apparatus, amplitude information extraction apparatus (110) acquires amplitude information (amplitude value Z') to be corrected from an I component and Q component of a transmission signal. Phase information extraction apparatus (111) acquires phase information from an I component and Q component of the transmission signal. Amplitude information extraction apparatus (110) then acquires amplitude value Z by correcting the acquired amplitude information (amplitude value Z') based on the phase information acquired by phase information extraction apparatus (111).

## Description

### Technical Field

The present invention relates to an amplitude information extraction apparatus and an amplitude information extraction method applicable to a wireless transmission apparatus used in a wireless communication system.

### Background Art

For example, polar loop modulation scheme may be applied to a wireless transmission apparatus used in a wireless communication system. The polar loop modulation scheme is a modulation scheme where modulation is performed on polar coordinates. In the polar loop modulation scheme, after a signal to be transmitted is separated into a phase component and an amplitude component, phase modulation and amplitude modulation is performed separately, the phase and amplitude are combined, and a modulation signal is output and transmitted. Further, the modulation signal is separated into phase and amplitude components, and error correction for the phase and amplitude components is performed respectively by performing feedback loop control. As a result, the polar loop modulation scheme has a feature that it is possible to output a modulation signal of a linear modulation scheme even if linearity is low.

This polar loop modulation scheme is a dated technique, and a large number of patents relating to an apparatus and method employing the polar loop modulation scheme have been applied for. However, these applications relate to a technique for subsequent stages of phase/amplitude separation.

Typical examples of a technique of extracting phase information and a technique of extracting amplitude information are disclosed, for example, in patent document 1 and patent document 2 respectively.

With the phase information extraction method disclosed in patent document 1, a table of tan⁻¹ (Q/I) is generated as the phase information.

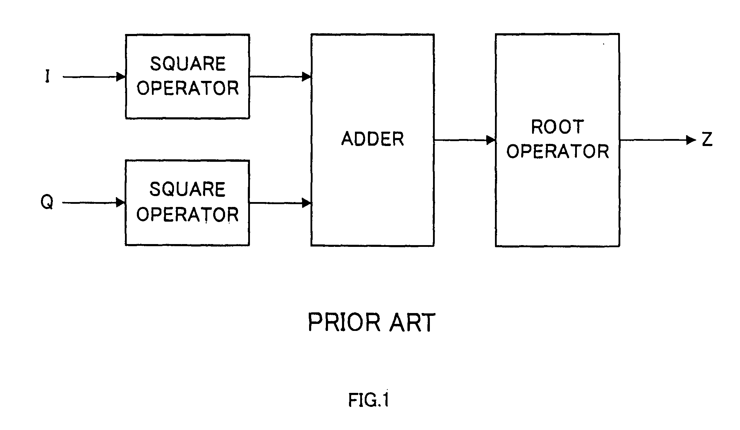

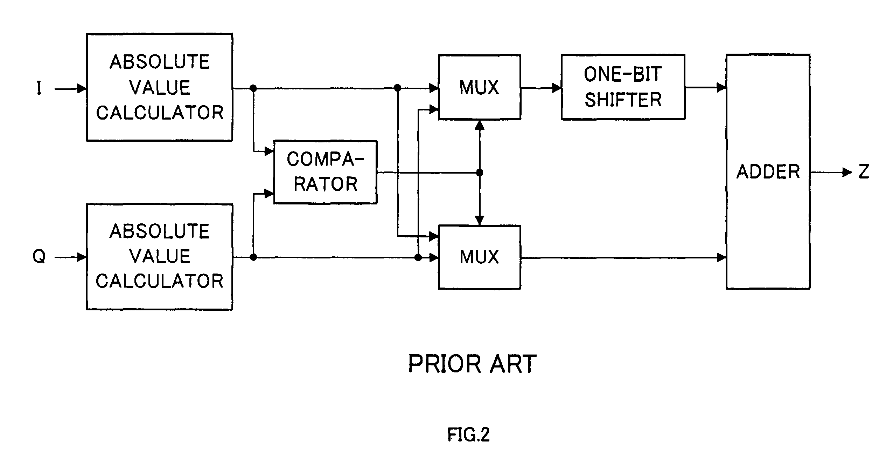

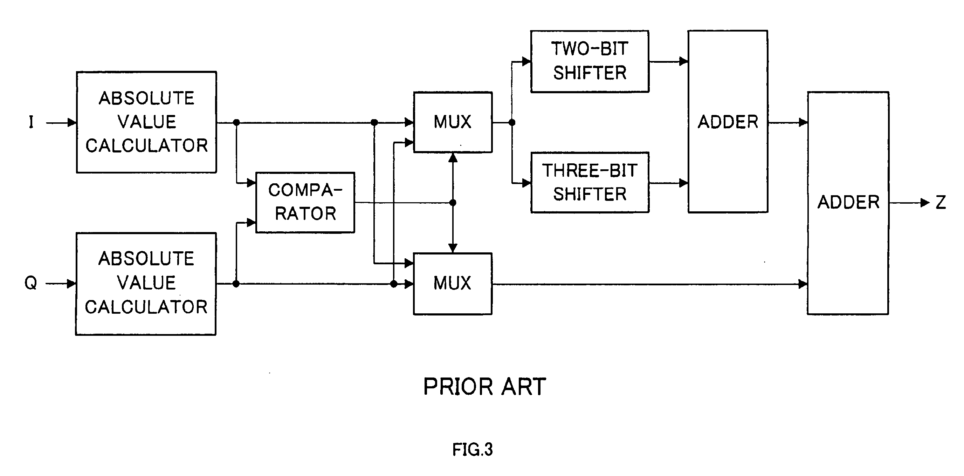

On the other hand, in patent document 2, three methods for amplitude information extraction shown in FIG.1, FIG.2 and FIG.3 are disclosed. The method shown in FIG.1 is a theoretical operation method (hereinafter referred to as "conventional technique A") where the amplitude can be obtained from Z= (I²+Q²)^{1/2}. The method shown in FIG.2 is a method using an approximation (hereinafter referred to as "conventional technique B"), where the amplitude is calculated using an arithmetic expression Z≈|I|+0.5|Q| when |I|>|Q|, and is calculated using an arithmetic expression Z≈ | Q | + 0.5 | I | when | Q | > | I |. The method shown in FIG.3 (hereinafter referred to as "conventional technique C") also uses an approximation as with that shown in FIG.2, where amplitude is calculated using an arithmetic expression Z ≈ | I | + 0.375 | Q | when | I |>| Q | and is calculated using an arithmetic expression Z ≈ | Q | + 0.375 | I | when | Q |>| I |.
Patent Document 1: Japanese Patent Laid-open Publication No. Hei.10-262023.
Patent Document 2: Japanese Patent Laid-open Publication No. Hei.9-325955.

### Disclosure of Invention

### Problems to be Solved by the Invention

However, while there has been discussions relating to various techniques of the subsequent stages of phase/amplitude separation, there has not been discussions relating to phase/amplitude separation techniques. Therefore, there is a problem that the precision of amplitude information extraction is not sufficient in a conventional amplitude information extraction apparatus and amplitude information extraction method.

For example, in conventional technique A, not only does the scale of the circuit (theoretical operation circuit) implementing this method become large, but it requires much operation time because a root operation is necessary. That is, this method is not practical, particularly in case where a high speed operation is necessary.

Furthermore, conventional technique B specifically requires bit shift only, and therefore it is possible to make the circuit scale small compared to conventional technique A, but errors increase considerably.

Further, conventional technique C specifically requires bit shift and addition only, and therefore it is possible to make the circuit scale small compared to conventional technique A, but errors increase considerably.

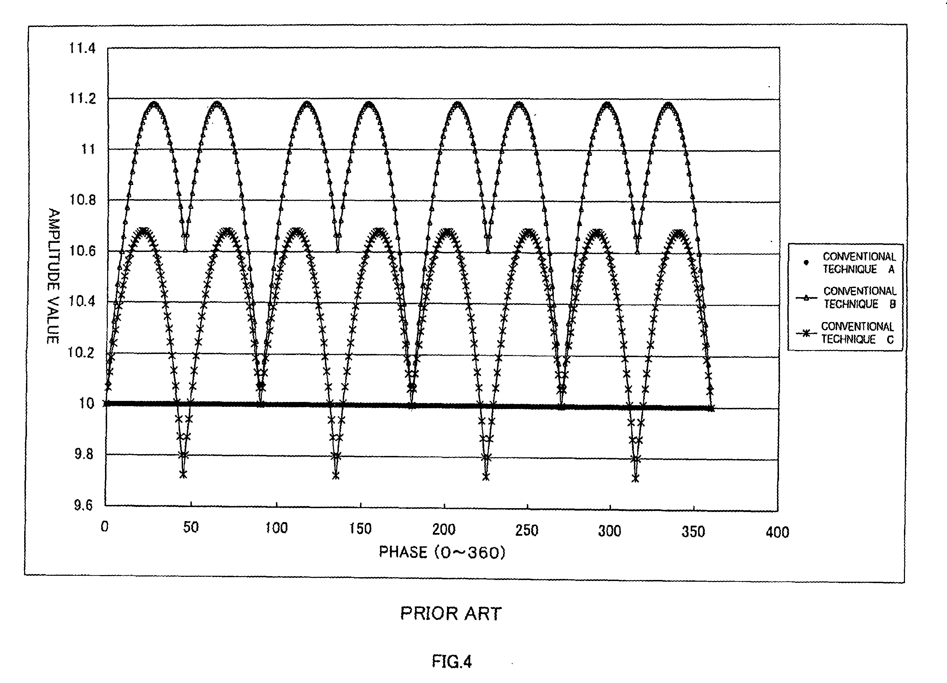

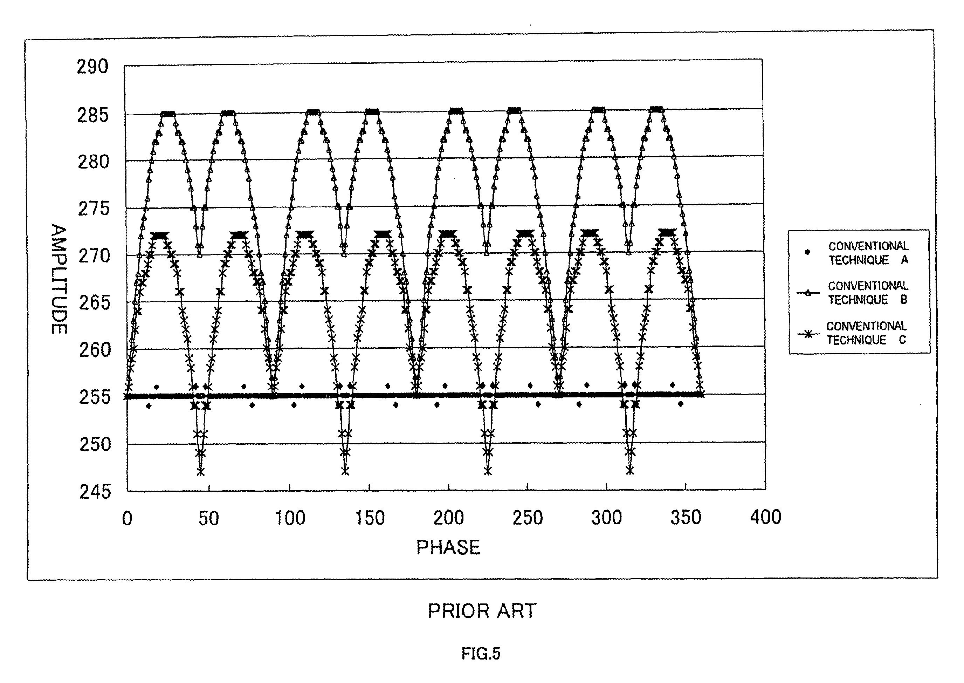

The problem described above can be understood by looking at FIG.4 showing simulation results by numeric calculations and FIG.5 showing simulation results by bit operations (operations with quantization errors). It is therefore preferable to obtain an amplitude information extraction apparatus and amplitude information extraction method capable of reducing amplitude errors with a smaller circuit scale than theoretical operation circuits.

It is therefore an object of the present invention to provide an amplitude information extraction apparatus and an amplitude information extraction method capable of reducing amplitude error with a smaller circuit scale than theoretical operation circuits.

### Means for Solving the Problem

An amplitude information extraction apparatus of the present invention adopts a configuration having an amplitude information acquisition section that acquires amplitude information of a transmission signal from an I component and Q component of the transmission signal, a phase information acquisition section that acquires phase information of the transmission signal from the I component and Q component of the transmission signal, and an amplitude error correction section that corrects amplitude error of the amplitude information based on the phase information.

An amplitude information extraction method of the present invention has an amplitude information acquisition step of acquiring amplitude information of a transmission signal from an I component and Q component of the transmission signal, a phase information acquisition step of acquiring phase information of the transmission signal from the I component and Q component of the transmission signal, and an amplitude error correction step of correcting amplitude error of the amplitude information based on the phase information.

### Advantageous Effect of the Invention

According to the present invention, it is possible to reduce amplitude error with a smaller circuit scale than theoretical operation circuits.

### Brief Description of the Drawings

FIG.1 is a view illustrating a first example of a conventional amplitude information extraction method;
FIG.2 is a view illustrating a second example of a conventional amplitude information extraction method;
FIG.3 is a view illustrating a third example of a conventional amplitude information extraction method;
FIG.4 is a view showing simulation results of a numeric calculation based on a conventional amplitude information extraction method;
FIG.5 is a view showing simulation results of a bit operation based on a conventional amplitude information extraction method;
FIG.6 is a block diagram showing a configuration of a polar loop modulation apparatus equipped with an amplitude information extraction apparatus according to embodiment 1 of the present invention;
FIG.7 is a block diagram showing a detailed configuration of an amplitude information extraction apparatus according to embodiment 1 of the present invention;
FIG.8 is a view illustrating operation of an amplitude error correction section of an amplitude information extraction apparatus according to embodiment 1 of the present invention;
FIG.9 is a view illustrating a first example of amplitude error fluctuation corresponding to phase information in embodiment 1 of the present invention;
FIG.10 is a view illustrating a second example of amplitude error fluctuation corresponding to phase information in embodiment 1 of the present invention;
FIG.11 is a view illustrating an example of a processing operation of phase information in embodiment 1 of the present invention;
FIG.12 is a view showing results of simulation performed using an amplitude information extraction apparatus according to embodiment 1 of the present invention;
FIG.13 is a block diagram showing a configuration of a polar loop modulation apparatus equipped with an amplitude information extraction apparatus according to embodiment 2 of the present invention;
FIG.14 is a block diagram showing a detailed configuration of an amplitude information extraction apparatus according to embodiment 2 of the present invention;
FIG.15 is a view illustrating operation of an amplitude error correction section of an amplitude information extraction apparatus according to embodiment 2 of the present invention; and
FIG.16 is a view showing results of simulation performed using an amplitude information extraction apparatus according to embodiment 2 of the present invention.

### Best Mode for Carrying Out the Invention

Embodiments of the present invention will be explained below in detail with reference to the accompanying drawings.

### (Embodiment 1)

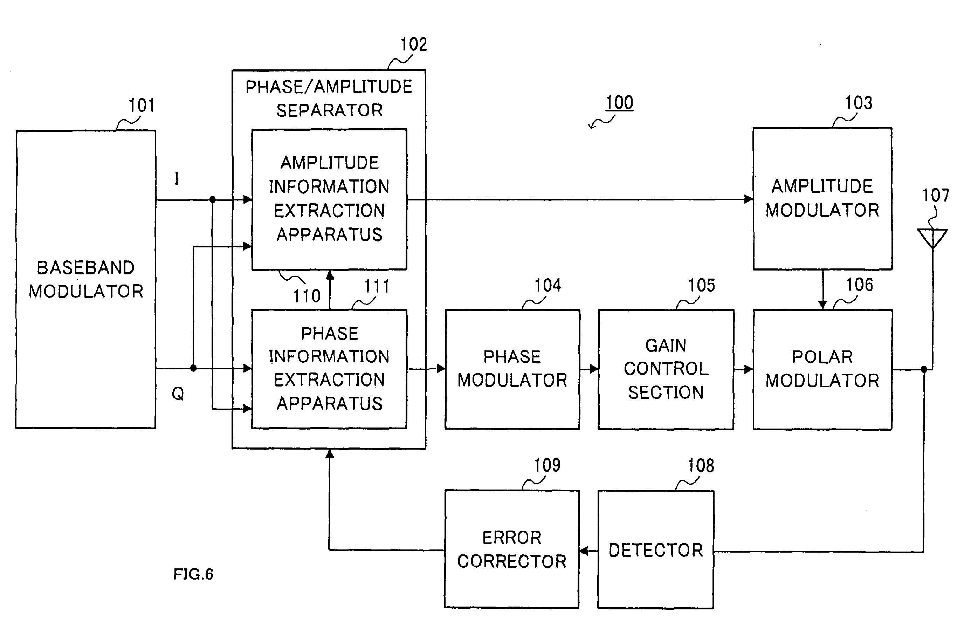

FIG.6 is a block diagram showing a configuration of a polar loop modulation apparatus equipped with an amplitude information extraction apparatus according to embodiment 1 of the present invention. In the configuration of this polar loop modulation apparatus, the stages subsequent to separation into phase and amplitude are shown as examples and the polar loop modulation apparatus may also be applied to another amplitude and phase combining and modulation apparatus.

Polar loop modulation apparatus 100 shown in FIG. 6 has baseband modulator 101 that performs baseband modulation on a transmitted signal and outputs an I component and Q component, phase/amplitude separator 102 that separates an amplitude component and a phase component from the I component and Q component, amplitude modulator 103 that performs amplitude modulation on the amplitude component, phase modulator 104 that performs phase modulation on the phase component, gain control section 105 that performs gain control on an output from phase modulator 104, polar modulator 106 that performs polar modulation based on each output from amplitude modulator 103 and gain control section 105, antenna 107 that wirelessly transmits output signals from polar modulator 106, and detector 108 and error corrector 109 that perform phase and amplitude error correction using feedback loop control.

Furthermore, phase/amplitude separator 102 has amplitude information extraction apparatus 110 that extracts amplitude information from the I component and Q component, and phase information extraction apparatus 111 that extracts phase information from the I component and Q component.

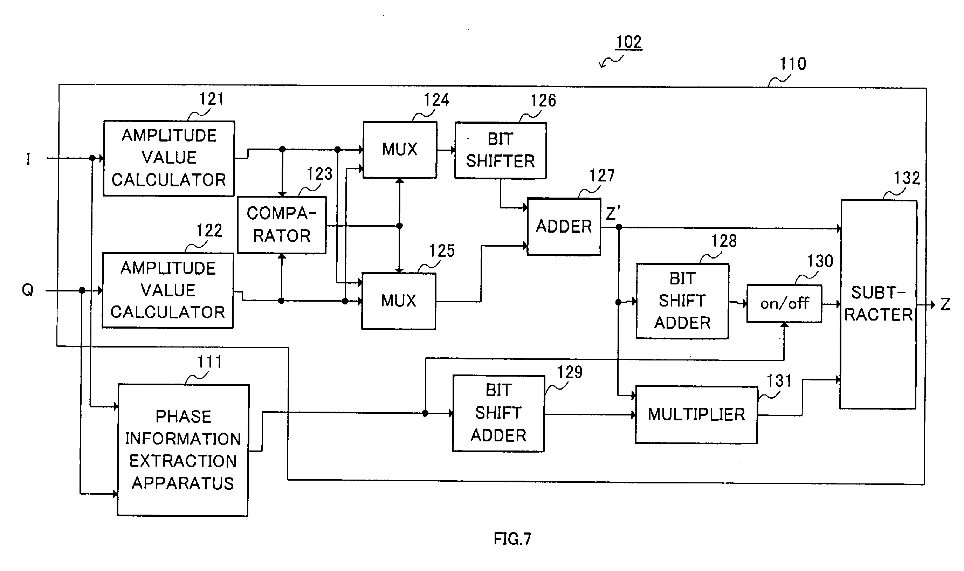

FIG.7 is a block diagram showing an example of a detailed configuration of amplitude information extraction apparatus 110 of phase/amplitude separator 102.

The amplitude information extraction apparatus 110 shown in FIG.7 has two absolute value calculators 121, 122, comparator 123, two multiplexers (MUX) 124, 125, bit shifter 126, adder 127, two bit shift adders 128, 129, on/off section 130, multiplier 131, and subtracter 132.

At amplitude information extraction apparatus 110, the combination of bit shift adders 128, 129, on/off section 130, multiplier 131 and subtracter 132 constitute an amplitude error correction section that corrects errors of amplitude value Z' output from adder 127 and outputs the corrected amplitude value Z.

Absolute value calculator 121 calculates the absolute value of the I component and absolute value calculator 122 calculates the absolute value of the Q component. Comparator 123 compares the outputs of absolute value calculator 121 and absolute value calculator 122. MUX 124 outputs the absolute value of the Q component when the absolute value of the I component is larger than the absolute value of the Q component, and outputs the absolute value of the I component when the absolute value of the Q component is larger than the absolute value of the I component, based on the output from comparator 123. On the other hand, MUX 125 outputs the absolute value of the I component when the absolute value of the I component is larger than the absolute value of the Q component, and outputs the absolute value of the Q component when the absolute value of the Q component is larger than the absolute value of the I component, based on the output from comparator 123. Bit shifter 126 performs a one-bit shift on the output fromMUX 124. Adder 127 adds the outputs from MUX 125 and bit shifter 126 and outputs amplitude value Z'.

Bit shift adder 128 performs a predetermined bit shift/addition on amplitude value Z' . On/off section 130 switches on and off output from bit shift adder 128 to subtracter 132 based on an output of phase information extraction apparatus 111. Bit shift adder 129 performs a predetermined bit shift/addition on the output from phase information extraction apparatus 111. Multiplier 131 multiplies amplitude value Z' and an output from bit shift adder 129. When on/off section 130 is in a on status, subtracter 132 subtracts the output from multiplier 131 and bit shift adder 128 from the amplitude value Z' and outputs amplitude value Z, and when on/off section 130 is in a off status, subtracts the output of multiplier 131 from amplitude value Z' and outputs amplitude value Z. Bit shift adders 128, 129, on/off section 130, multiplier 131, and subtracter 132 constituting the amplitude error correction section are circuits configured so as to realize an operation which will be explained later.

Bit shifter 126 may have a configuration to perform two-bit shift and three-bit shift on the output fromMUX 124 and add results of two-bit shift and three-bit shift, instead of performing one-bit shift, or may have some other configurations. Therefore, in amplitude information extraction apparatus 110, the part including absolute value calculators 121, 122, comparator 123, MUX 124, 125, bit shifter 126 and adder 127 adopts a configuration that performs the amplitude information extractionmethoddescribed, for example, as conventional techniques B and C, constituting an amplitude information acquisition section that acquires amplitude information before correction of the transmission signal, from the I component and Q component of the transmission signal.

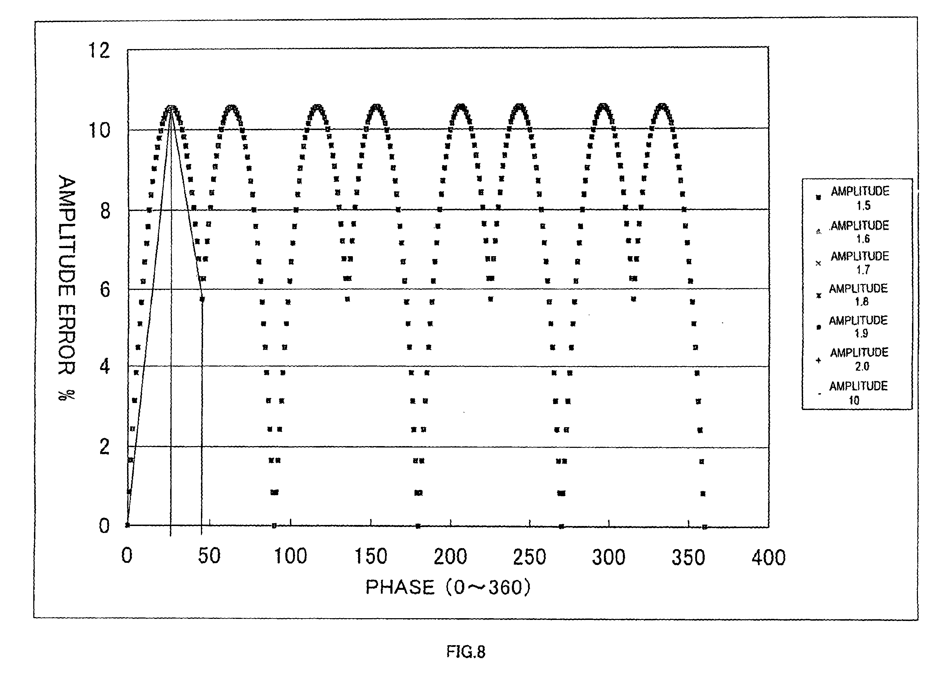

Next, the operation of the amplitude error correction section of polar loop modulation apparatus 100 having the above configuration will be explained. FIG. 8 is a view illustrating an operation of the amplitude error correction section.

The amplitude error correction section handles phase information for 0 to 360 degrees output from phase information extraction apparatus 111 by separating the phase information into eight processing unit areas, that is, an area for 0 to 45 degrees (first processing unit area), an area for 46 to 90 degrees (second processing unit area), ... , and an area for 316 to 360 degrees (eighth processing unit area). Further, each processing unit area is separated into two areas, a front area (a front half sub-area), for example, which is an area for 0 to 27 degrees in the first processing unit area, and a rear area (a rear half sub-area), for example, which is an area for 28 degrees to 45 degrees in the first processing unit area.

Then, the amplitude error correction section corrects errors of amplitude value Z' and acquires amplitude value Z' using a first approximation at the front half sub-area and using a second approximation at the rear half sub-area. Each approximation can be obtained by performing collinear approximation on fluctuation of amplitude errors at the front half sub-area and the rear half sub-area as shown in FIG.8. In the example shown in FIG.8, coefficients of collinear approximation relating to the first approximation include the slope of "0.0039625" and the Y-intercept of "0", while, on the other hand, coefficients of collinear approximation relating to the second approximation has the slope of "-0.00390625" and the Y-intercept of "0.21875".

In order to implement these coefficients on a circuit, when the phase information is a value belonging to the front half sub-area, bit shift adder 129 performs a rightward eight-bit shift, bit shift adder 128 performs an operation of (subtracting a rightward five-bit shift from a rightward two-bit shift), on/off section 130 switches an output status from bit shift adder 128 to subtracter 132 to an off status, and subtracter 132 subtracts an output of multiplier 131 from amplitude value Z' to output amplitude value Z. In this way, the first approximation for Z=Z'-Z'×(0.00390625×θ) is implemented (where 0≤θ≤27).

On the other hand, when the phase information is a value belonging to the rear half sub-area, bit shift adder 129 performs a rightward eight-bit shift and converts the rightward eight-bit shift results into a negative value, and bit shift adder 128 performs an operation of (subtracting a rightward five-bit shift from a rightward two-bit shift), on/off section 130 switches an output status from bit shift adder 128 to subtracter 132 to an on status, and subtracter 132 subtracts an output of multiplier 131 and bit shift adder 128 from amplitude value Z' to output amplitude value Z. In this way, the second approximation for Z=Z'-Z'×(-0.00390625×θ)-(0.21875×Z') is implemented (where 28≤θ≤45).

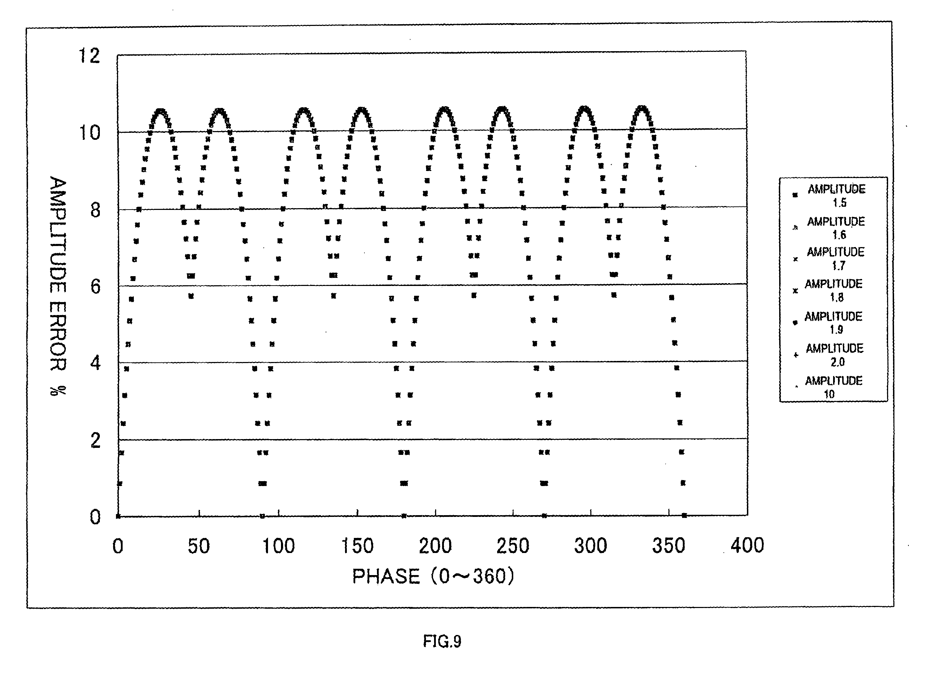

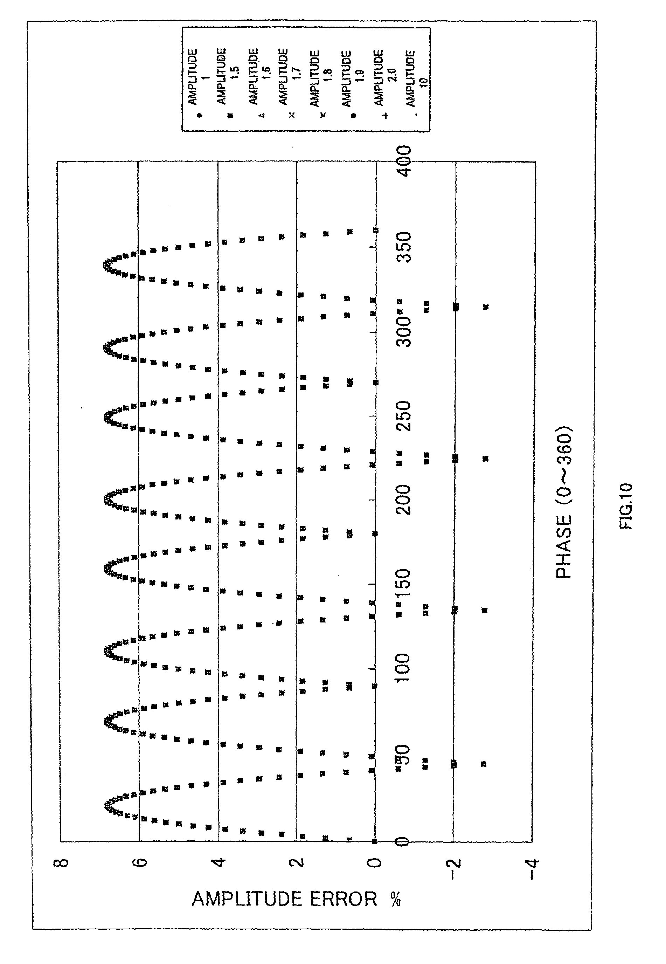

Here, the basis for separating the phase information into the areas described above will be explained. FIG.9 is a view illustrating a first example of amplitude error fluctuation corresponding to phase information, and FIG.10 is a view illustrating a second example of amplitude error fluctuation corresponding to phase information.

An example shown in FIG.9 is operation results using conventional technique B, and an example shown in FIG.10 is operation results using conventional technique C. From these examples, it can be understood that, whatever the adopted amplitude value is, amplitude error fluctuation corresponding to phase information is the same, and the amplitude error fluctuates periodically with phase fluctuation. Therefore, in this embodiment, as shown in FIG.8, phase information is divided into eight processing unit areas by utilizing the fact that the amplitude error becomes smaller every 45 degrees, and each processing unit area is further divided into a front half sub-area and a rear half sub-area by utilizing the fact that the amplitude error becomes a maximum at central parts of each processing unit area (27 degrees for the first processing unit area).

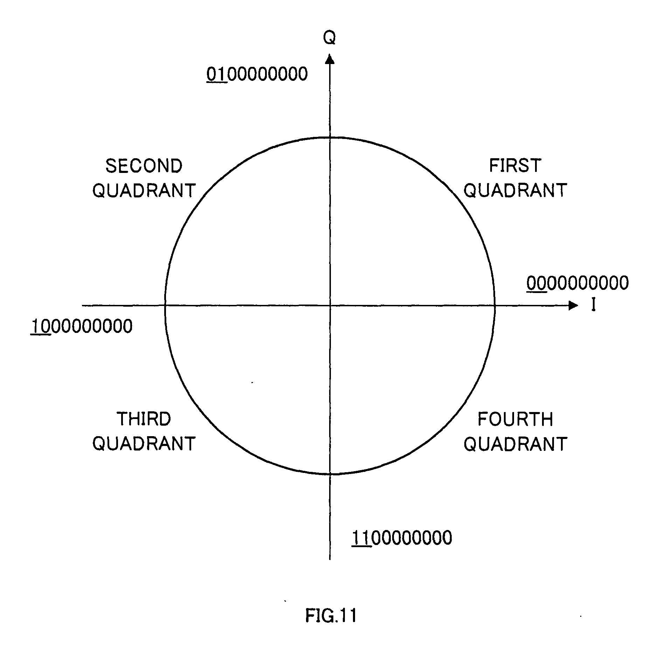

Next, an operation for processing phase information at the amplitude error correction section will be explained. FIG.11 is a view illustrating an example of phase information processing operation. Here, an example will be described where phase information is expressed using ten bits.

In the event of expressing 360 degrees using ten bits, as ten bits is "1023," the phase per bit is 0.3519 degrees. As shown in FIG. 11, information of two bits as MSB (most significant bits) represents the first to fourth quadrants, and information of lower eight bits represents 0 to 90 degrees, and information of lower seven bits represents 0 to 45 degrees. Therefore, in the event that phase information is represented using, for example, ten bits, if information of the lower seven bits is referred to, it is possible to round off the phase information into 0 to 45 degrees (i.e. θ), that is, the phase information can be processed in eight separate processing unit areas.

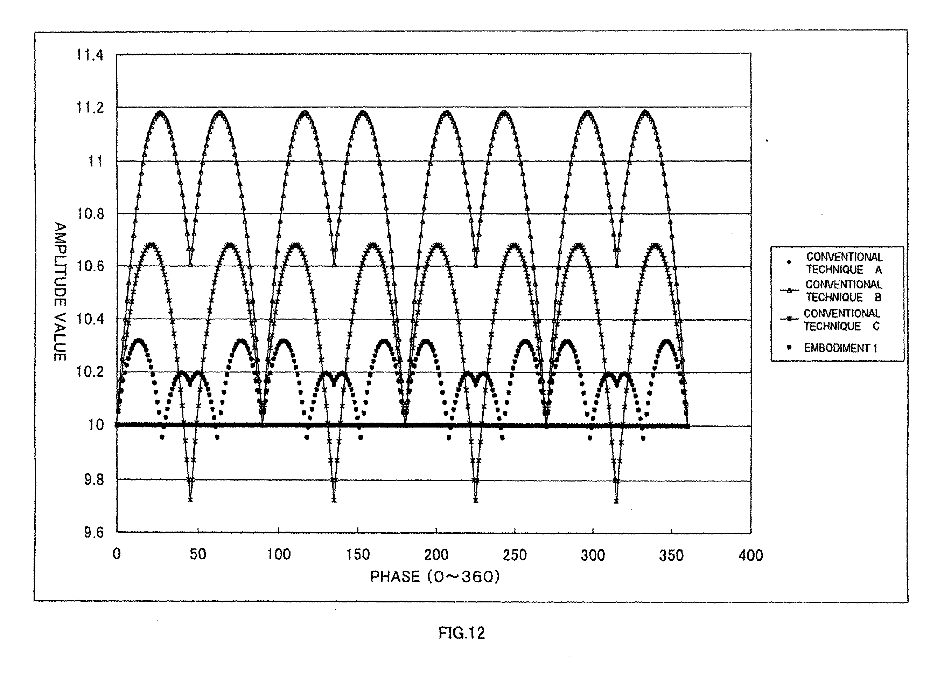

Next, the operation results performed using amplitude information extraction apparatus 110 of this embodiment are shown in FIG.12. As can be understood from FIG. 12, errors can be reduced compared to the conventional technologies A, B, C in the event that amplitude value Z is calculated using amplitude information extraction apparatus 110.

According to this embodiment, amplitude value Z' acquired from an I component and Q component of a transmission signal is corrected based on phase information, and therefore it is possible to correct amplitude errors specific to the phase of the transmission signal and obtain amplitude value Z, and this makes it possible to reduce amplitude errors while achieving a faster processing speed with a smaller circuit scale than theoretical operation circuits.

Further, according to this embodiment, information of the lower bits of the phase information is referred to and parameter used to correct amplitude error are decided in accordance with information of the referred lower bits, therefore it is possible to correct amplitude errors having a characteristic fluctuating periodically with phase fluctuation. Moreover, this parameter is a slope and Y-intercept of a function obtained by performing collinear approximation on amplitude errors to be corrected at a front half sub-area and rear half sub-area of each processing unit area, and therefore amplitude errors can be corrected easily.

Polar loop modulation apparatus 100 according to this embodiment may be applied to a wireless transmission apparatus used in a wireless communication system, and may particularly be applied to a wireless transmission apparatus operating with a high clock frequency.

### (Embodiment 2)

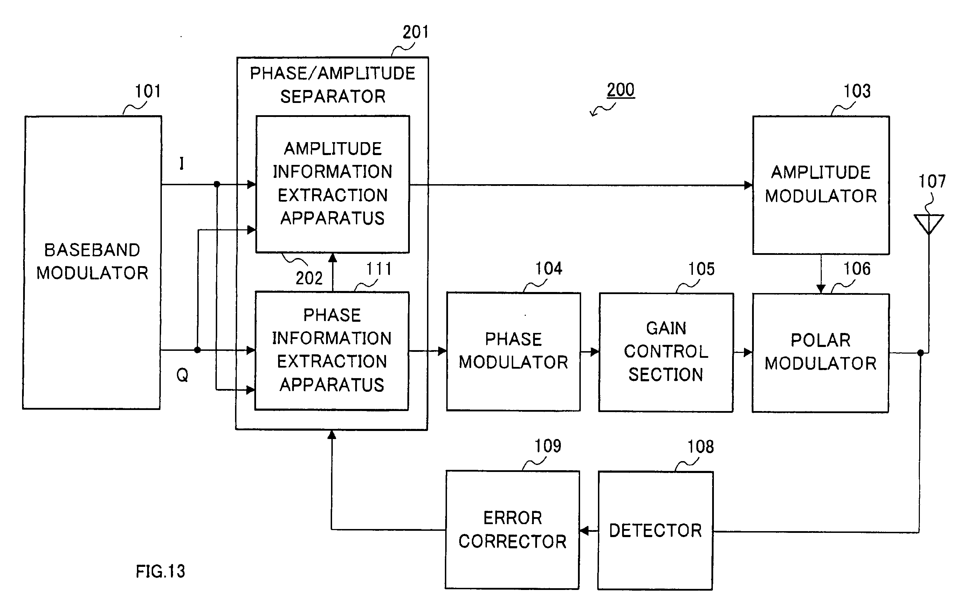

FIG.13 is a block diagram showing a configuration of a polar loop modulation apparatus according to embodiment 2 of the present invention. The polar loop modulation apparatus according to this embodiment has a basic configuration that is similar to polar loop modulation apparatus 100 described in embodiment 1, the same reference numerals are assigned to the same structural elements, and detailed description thereof is therefore omitted.

Polar loop modulation apparatus 200 shown in FIG.13 is equipped with phase/amplitude separator 201 in place of phase/amplitude separator 102 of polar loop modulation apparatus 100. Further, phase/amplitude separator 201 has phase information extraction apparatus 111 and amplitude information extraction apparatus 202.

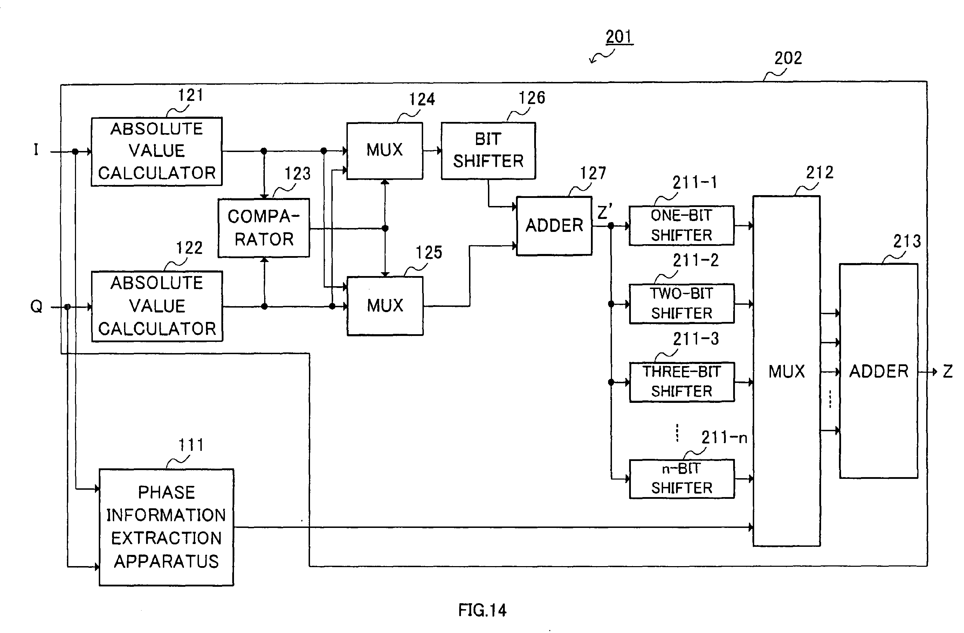

FIG.14 is a block diagram showing an example of a detailed configuration of amplitude information extraction apparatus 202 of phase/amplitude separator 201.

Amplitude information extraction apparatus 202 shown in FIG.14 has absolute value calculators 121, 122, comparator 123, multiplexers (MUX) 124, 125, bit shifter 126, adder 127, one-bit shifter 211-1, two-bit shifter 211-2, three-bit shifter 211-3, ... , n-bit shifter 211-n, MUX 212, and adder 213.

At amplitude information extraction apparatus 202, a combination of one-bit shifter 211-1, two-bit shifter 211-2, three-bit shifter 211-3, ... , n-bit shifter 211-n, MUX 212 and adder 213 constitutes an amplitude error correction section that corrects errors of amplitude value Z' output from adder 127 and outputs the corrected amplitude value Z.

One-bit shifter 211-1, two-bit shifter 211-2, three-bit shifter 211-3, ... , and n-bit shifter 211-n perform one-bit shift (equivalent to "0.5"), two-bit shift (equivalent to "0.25"), three-bitshift (equivalent to "0.125"), ... , and n-bit shift, respectively, on amplitude value Z' output from adder 127.

MUX 212 then switches outputs fromone-bit shifter 211-1, two-bit shifter 211-2, three-bit shifter 211-3, ... , n-bit shifter 211-n, to adder 213, based on phase information θ output from phase information extraction apparatus 111.

Adder 213 then adds the output from MUX 212 and outputs amplitude value Z obtained as a result of this addition.

Next, the operation of the amplitude error correction section of polar loop modulation apparatus 200 having the above configuration will be explained.

The amplitude error correction section handles phase information for 0 to 360 degrees output from phase information extraction apparatus 111 by dividing into eight processing unit areas every 45 degrees as described in embodiment 1.

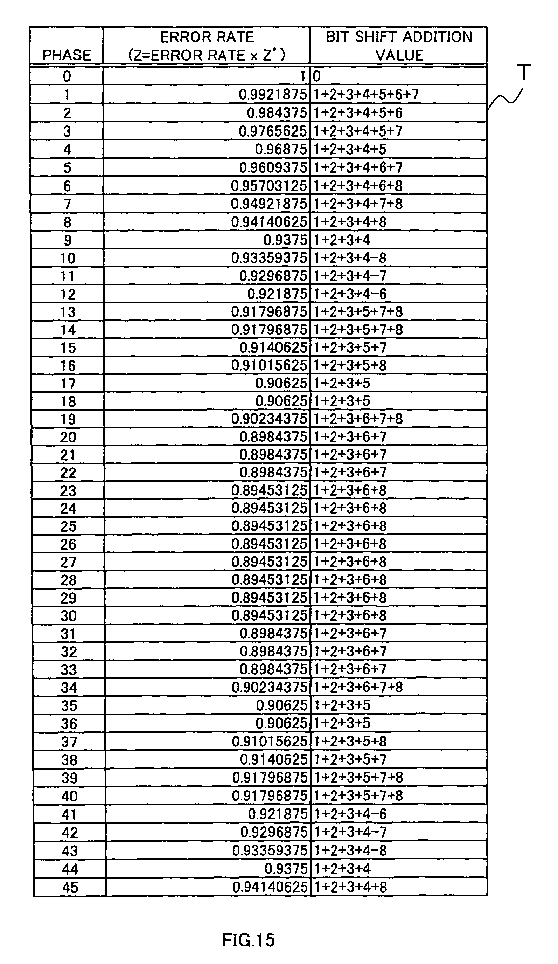

Then, at the amplitude error correction section, an error rate is set in advance to correct amplitude errors occurring at amplitude value Z' according to information for the lower bits of the phase information, that is, according to a phase within a processing unit area, and to thereby obtain amplitude value Z. Then, in order to implement multiplication of each error rate on a circuit, it is set in advance according to each phase which of the outputs from one-bit shifter 211-1, two-bit shifter 211-2, three-bit shifter 211-3, ... , or n-bit shifter 211-n is selected and added. Table T showing each of these settings is shown in FIG.15. In table T, the "bit shift addition value" column shows which of the outputs from one-bit shifter 211-1, two-bit shifter 211-2, three-bit shifter 211-3, ... , or n-bit shifter 211-n is selected and added. For example, it shows that, when a phase is "36" (θ = 36), an error rate is "0.90625", and if outputs from one-bit shifter 211-1, two-bit shifter 211-2, three-bit shifter 211-3, and five-bit shifter (not shown) are selected by MUX 212 and added by adder 213, then multiplication of the error rate "0.90625" is executed.

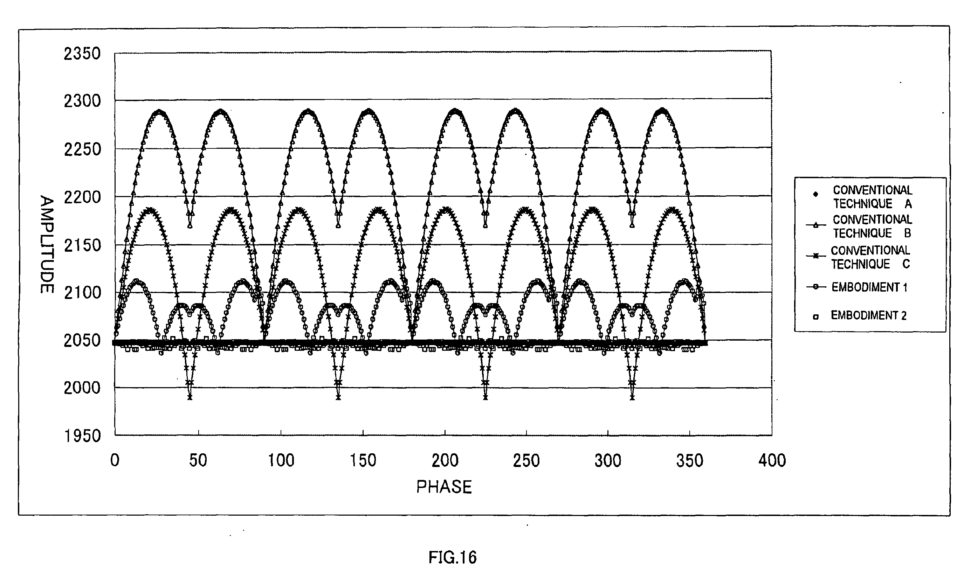

Next, the results of simulation performed using amplitude information extraction apparatus 202 in this embodiment are shown in FIG. 16. As can be understood from FIG.16, in the event that amplitude value Z is calculated using amplitude information extraction apparatus 202, amplitude value Z can be obtained without any significant errors.

According to this embodiment, amplitude value Z' acquired from an I component and Q component of the transmission signal is corrected based on phase information, and therefore it is possible to correct amplitude error specific to the phase of the transmission signal and obtain amplitude value Z, and this makes it possible to reduce amplitude errors while achieving a faster processing speed with a smaller circuit scale than theoretical operation circuits.

Further, according to this embodiment, information for the lower bits of the phase information is referred to and parameter used to correct amplitude error are decided in accordance with information of the referred lower bits, therefore it is possible to correct amplitude error having a characteristic fluctuating periodically with phase fluctuation. Further, this parameter is an error rate specific to each of the information for the referred lower bits, i.e. each phase within a processing unit area. Precision of correction of amplitude error can therefore be greatly improved.

Polar loop modulation apparatus 200 in this embodiment may be applied to a wireless transmission apparatus used in a wireless communication system, and may particularly be applied to a wireless transmission apparatus operating with a high clock frequency.

This application is based on Japanese patent application No. 2003-341720, filed on September 30, 2003, the entire content of which is expressly incorporated by reference herein.

### Industrial Applicability

The amplitude information extraction apparatus and amplitude information extraction method of the present invention has the advantage of reducing amplitude errors with a smaller circuit scale than theoretical operation circuits, and is therefore useful in an application to a wireless transmission apparatus used in a wireless communication system.

## Claims

1. An amplitude information extraction apparatus comprising:
an amplitude information acquisition section that acquires amplitude information of a transmission signal from an I component and Q component of the transmission signal;
a phase information acquisition section that acquires phase information of the transmission signal from the I component and Q component of the transmission signal; and
an amplitude error correction section that corrects an amplitude error of the amplitude information based on the phase information.

2. The amplitude information extraction apparatus according to claim 1, wherein said amplitude error correction section refers to information of a predetermined lower bit of the phase information and determines a parameter used to correct the amplitude error.

3. The amplitude information extraction apparatus according to claim 2, wherein said parameter is obtained by performing collinear approximation on an amplitude error to be corrected every predetermined area.

4. The amplitude information extraction apparatus according to claim 2, wherein said parameter is a value specific to each of the information of the referred predetermined lower bit.

5. A polar loop modulation apparatus comprising the amplitude information extraction apparatus according to claim 1.

6. An amplitude information extraction method comprising:
an amplitude information acquisition step of acquiring amplitude information of a transmission signal from an I component and Q component of the transmission signal;
a phase information acquisition step of acquiring phase information of the transmission signal from the I component and Q component of the transmission signal; and
an amplitude error correction step of correcting an amplitude error of the amplitude information based on the phase information.
